# EUROPÄISCHE PATENTSCHRIFT

(11) **EP 0 484 735 B1**
(45) Veröffentlichungstag und Bekanntmachung des Hinweises auf die Patenterteilung: **27.07.1994**
(21) Anmeldenummer: 91118031.3
(22) Anmeldetag: 23.10.1991
(51) Int. Cl.: B30B 5/06, B29C 43/48, B29K 105/08

(54) **Verfahren zur Herstellung von Faserverbundwerkstoffen**
Methode of making fibre reinforced composites
Procédé pour la fabrication de matériaux comportant des fibres tissées

(30) Priorität: 09.11.1990 DE 4035610
(43) Veröffentlichungstag der Anmeldung: 13.05.1992
(73) Patentinhaber: BASF Aktiengesellschaft, 67063 Ludwigshafen (DE)
(72) Erfinder: Brentrup, Karl-Ludwig, W-4500 Osnabrueck (DE); Erfmann, Friedrich Heinrich, W-4531 Lotte (DE)

(56) Entgegenhaltungen:
- DE-A- 3 347 877
- GB-A- 1 198 393
- US-A- 2 500 728
- US-A- 2 924 471
- US-A- 3 487 143
- US-A- 4 851 068

## Beschreibung

Die Erfindung betrifft ein Verfahren zur Herstellung von Faserverbundwerkstoffen aus einer Thermoplastmatrix und Glasfasermatten oder -gelege.

Faserverbundwerkstoffe auf Basis von thermoplastischen Kunststoffen finden in zunehmendem Maße Anwendung im Automobilbau. Es war daher erforderlich, kostengünstige, mit hohen Durchsätzen arbeitende Verfahren zur Herstellung solcher Verbundwerkstoffe zu entwickeln.

In der DE-C 2948235 ist ein Verfahren zur Herstellung einer mit Glasfasern verstärkten thermoplastischen Platte beschrieben. Dabei werden in einer Doppelbandpresse genadelte Fasermatten und ein geschmolzener Thermoplast bei einem Druck zwischen 0,1 und 20 bar miteinander verpreßt und zu einer faserverstärkten Platte verfestigt. Der verhältnismäßig niedrige Druck reicht aus, um die lockeren Glasmatten vollständig und luftblasenfrei zu tränken.

Es hat sich jedoch gezeigt, daß es kaum möglich ist, mit diesem Verfahren in ausreichender Konstanz Platten herzustellen, die über ihre ganze Breite hinweg eine gleichmäßige Form und Struktur aufweisen. Man erhält immer wieder Platten mit Dickeschwankungen vor allem am Plattenrand, sowie ungleichmäßige Glas- und Matrix-Verteilung. Diese Erscheinungen treten insbesondere dann auf, wenn man die Glasfasermatten mit niedrigviskosen Thermoplasten, z.B. Polypropylen, imprägniert, oder wenn man Thermoplaste verwendet, die bei höheren Temperaturen verarbeitet werden müssen, z.B. Polyamid.

In der DE-A 29 23 036 ist eine Doppelbandpresse mit seitlichen Dichtleisten beschrieben. Sie dient zur Herstellung von Gummibändern, die mit Stahlseileinlagen versehen sind. Dabei werden Gummibahnen und Stahlseile gemeinsam in die beheizte Doppelbandpresse eingeführt, wobei der Gummi erweicht, die Stahlseite umfließt und vulkanisiert wird. Um zu verhindern, daß der flüssige Gummi seitlich aus der Presse herausläuft, ist diese durch Dichtleisten abgeschlossen, die als mitlaufende Seitenbegrenzungsbänder aus Gummi oder Kunststoff ausgebildet sind. Zur Herstellung von Faserverbundwerkstoffen aus einer Thermoplastmatrix und Glasfasermatten wäre eine solche Doppelbandpresse nicht geeignet, da einfache Gummibänder bei den dort auftretenden hohen thermischen und mechanischen Belastungen reißen würden.

Der Erfindung lag also die Aufgabe zugrunde, die genannten Erscheinungen zu vermeiden und ein rasch und ökonomisch durchführbares Verfahren zur Herstellung von einheitlich aufgebauten Platten aus Faserverbundwerkstoff zu entwickeln.

Gegenstand der Erfindung ist ein Verfahren zur Herstellung von Faserverbundwerkstoffen aus einer Thermoplastmatrix und Glasfasermatten oder -gelege, wobei man kontinuierlich thermoplastischen Kunststoff und Glasfasermatten oder -gelege in eine Doppelbandpresse einführt, dort bei einer Temperatur oberhalb des Schmelzpunktes des Thermoplasten miteinander verpreßt und den Verbund unter Druck abkühlt, wobei die Doppelbandpresse durch endlose, mitlaufende Bänder aus Verstärkungseinlagen enthaltendem Kautschuk oder Kunststoff seitlich abgeschlossen ist.

Der seitliche Abschluß durch das mitlaufende Band bewirkt, daß die imprägnierte Glasfasermatte bzw. das Glasfasergelege während der Verdichtung nur begrenzt nach außen fließen kann; bei Druckanstieg durch ein Überangebot an Schmelze oder Glasfasern im Fall einer Störung kann das flexible über Reibschluß geführte Band ausweichen und ein Schaden an dem erzeugten Halbzeug wird vermieden. Außerdem wird eine hohe Temperaturkonstanz über die Breite des Preßgutes und damit auch der erzeugten Platten erhalten. Die Verstärkungseinlagen erhöhen die thermische Stabilität oder Dichtungsbänder und verhindern ein Reißen bei starker Belastung.

Das Verfahren geht vorzugsweise aus von üblichen Glasfasermatten, bevorzugt mit einem Flächengewicht von 150 bis 1200 g·m⁻². Die Matten können auf übliche Weise durch Nadeln verfestigt sein oder durch übliche Bindemittel gebunden sein. Man kann grundsätzlich auch Glasfasergelege in Form von parallen Faserbündeln verwenden.

Als Thermoplasten kommen die üblichen Polymeren in Frage, wie Polyolefine, Polyamide, thermoplastische Polyester, Polysulfone, Polyetherketone, Polyetherimide, Polyphenylensulfid sowie Mischungen davon. Bevorzugt wird Polypropylen mit einem MFI zwischen 6 und 300 g/10 min (bei 230°C/2,16 kg) eingesetzt. Das Verhältnis Thermoplast zu Glasfasern wird so gewählt, daß das fertige Halbzeug einen Glasgehalt von vorzugsweise 20 bis 50 Gew.-% aufweist.

Der thermoplastische Kunststoff kann in verschiedener Form der Doppelbandpresse zugeführt werden. Bevorzugt wird er als extrudierte Schmelze zugeführt; man kann aber auch Folien oder eine Kombination von Schmelze mit Folien zuführen, die dann im Einzugsbereich der Presse aufgeschmolzen werden.

In der Doppelbandpresse werden die Faserbündel mit der Thermoplastschmelze imprägniert. Dies geschieht bei einem Druck zwischen 0,1 und 10 bar, vorzugsweise zwischen 1 und 5 bar. Bei Fasergelegen können auch höhere Drücke bis 50 bar angewandt werden. Die Temperatur soll so hoch sein, daß der Thermoplast als Schmelze vorliegt, d.h. sie liegt mehr als 10, vorzugsweise 20 bis 120°C über dem Schmelzpunkt des Thermoplasten. Die Verweilzeit auf der Doppelbandpresse beträgt 30 sec bis 20 min, vorzugsweise 2 min bis 10 min. Die Doppelbandpresse weist eine Kühlzone auf, in welcher der Verbund auf Temperaturen unterhalb des Schmelzpunktes abgekühlt und dadurch verfestigt wird.

Die Doppelbandpresse ist durch endlose, mitlaufende Bänder aus einem elastischen Material seitlich abgeschlossen. Die Skizze zeigt einen Querschnitt durch eine derartige Doppelbandpresse. Mit (1) sind die Heiz- bzw. Kühlplatten bezeichnet, mit (2) die Rollen, über die die Stahlbänder (3) laufen, (4) ist die imprägnierte Glasfasermatte und (5) das seitlich mitlaufende Band. Am Ausgang der Doppelbandpresse zieht eine Rollenführung die Dichtungsbänder vom fertigen Halbzeug nach oben oder alternativ nach unten ab, dabei werden sie zweckmäßigerweise durch Walkbewegungen von anhaftenden, spröden Thermoplastresten befreit. Danach werden die Bänder, gespannt und seitlich gesteuert, dem Presseneinlauf wieder zugeführt. Der Antrieb erfolgt zwangsweise über die Stahlbänder.

Die mitlaufenden Bänder bestehen aus Verstärkungseinlagen enthaltendem Kautschuk oder Kunststoff. Geeignet sind z.B. natürlicher oder synthetischer Kautschuk, Silikonkautschuk, Polyurethankautschuk, kompressible Kunststoffe, wie z.B. Polytetrafluorethylen oder Polypropylen. Bevorzugt ist Silikonkautschuk. Die Kautschuke bzw. Kunststoffe enthalten zur Verbesserung der Stabilität Verstärkungseinlagen, z.B. Glasgewebe, Kohlenstoffasergewebe, Teflongewebe, Polyestergewebe, Metallgewebe oder Metallgliederbänder. Grundsätzlich sind auch dünne Stahlbänder, die mit Kunststoff beschichtet sind, geeignet. Besonders bevorzugt sind Metallgliederbänder, die mit Silikonkautschuk beschichtet sind. Die Wahl des elastischen Materials wird durch Anforderungen an die mechanische und thermische Beanspruchung bestimmt. Die Dicke der Bänder richtet sich nach dem Abstand der Stahlbänder und damit nach der erwünschten Dicke des hergestellten Verbundwerkstoffs. Sie beträgt im allgemeinen 4 bis 15, vorzugsweise 5 bis 10 mm. Bevorzugt sind die Bänder etwa 3 bis 20 % dicker als der Abstand der Stahlbänder voneinander.

Die erfindungsgemäß hergestellten Verbundwerkstoffe eignen sich als Halbzeug, aus dem durch Umformen und Verpressen Bauteile hergestellt werden können, die in verschiedenen Bereichen zum Einsatz kommen können, wie z.B. Automobil, Sportartikel, Möbel, etc.

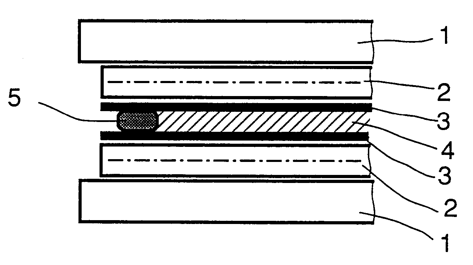

## Patentansprüche

1. Verfahren zur Herstellung von Faserverbundwerkstoffen aus einer Thermoplastmatrix und Glasfasermatten oder -gelegen, wobei man kontinuierlich thermoplastischen Kunststoff und Glasfasermatten oder -gelege (4) in eine Doppelbandpresse einführt, dort bei einer Temperatur oberhalb des Schmelzpunktes des Thermoplasten miteinander verpreßt und den Verbund unter Druck abkühlt, wobei die Doppelbandpresse durch endlose, mitlaufende Bänder (5) aus elastischem Material seitlich abgeschlossen ist, dadurch gekennzeichnet, daß die mitlaufenden Bänder (5) aus Verstärkungseinlagen enthaltendem Kautschuk oder Kunststoff bestehen.

2. Verfahren nach Anspruch 1, dadurch gekennzeichnet, daß die mitlaufenden Bänder (5) aus Verstärkungseinlagen enthaltendem Silikonkautschuk bestehen.

3. Verfahren nach Anspruch 1, dadurch gekennzeichnet, daß die Verstärkungseinlagen Fasergewebe aus Glas, Kohlenstoff, Polyester, Polytetrafluorethylen oder Metall sind.

4. Verfahren nach Anspruch 1, dadurch gekennzeichnet, daß die Verstärkungseinlagen Metallgliederbänder oder Stahlbänder sind.

5. Doppelbandpresse zur Herstellung von Faserverbundwerkstoffen aus einer Thermoplastmatrix und Glasfasermatten oder -gelegen, die durch endlose, mitlaufende Bänder (5) aus elastischem Material seitlich abgeschlossen ist, dadurch gekennzeichnet, daß die mitlaufenden Bänder (5) aus Verstärkungseinlagen enthaltendem Kautschuk oder Kunststoff bestehen.

## Claims

1. A process for producing fiber composite materials composed of a thermoplastic matrix and glass fiber mats or scrims by continuously introducing a thermoplastic and glass fiber mats or scrims (4) into a double belt press, pressing them together therein at a temperature above the melting point of the thermoplastic, and cooling the composite under pressure, the double belt press being sealed off on the side by endless, traveling belts (5) made of elastic material, characterized in that the traveling belts (5) consist of plastic or rubber containing reinforcing layers.

2. A process as claimed in claim 1, characterized in that the traveling belts (5) consist of silicone rubber containing reinforcing layers.

3. A process as claimed in claim 1, characterized in that the reinforcing layers are fiber weaves made of glass, carbon, polyester, polytetrafluoroethylene or metal.

4. A process as claimed in claim 1, characterized in that the reinforcing layers are metal link belts or steel belts.

5. A double belt press for producing fiber composite materials composed of a thermoplastic matrix and glass fiber mats or scrims said press being sealed off on the side by endless, traveling belts (5) made of elastic material, characterized in that the traveling belts (5) consist of plastic or rubber containing reinforcing layers.

## Revendications

1. Procédé pour la fabrication de matériaux composites en fibres à partir d'une matrice thermoplastique et de mats ou nappes de fibres de verre, de la matière synthétique thermoplastique et des mats ou nappes (1) en fibres de verre étant amenés en continu sur une presse à double bande, pressés dessus ensemble à une température au-dessus du point de fusion du thermoplastique et le composite étant refroidi sous pression, la presse à double bande étant délimitée latéralement au moyen de bandes (5) continues circulant conjointement, en matériau élastique, caractérisé en ce que les bandes circulant conjointement sont réalisées en caoutchouc ou matière synthétique contenant des pièces rapportées de renforcement.

2. Procédé selon la revendication 1, caractérisé en ce que les bandes (5) circulant conjointement sont réalisées en caoutchouc de silicone contenant des pièces rapportées de renforcement.

3. Procédé selon la revendication 1, caractérisé en ce que les pièces rapportées de renforcement sont des tissus de fibres, en verre, carbone, polyester polytetrafluoréthylène ou métal.

4. Procédé selon la revendication 1, caractérisé en ce que les pièces rapportées sont des bandes à maillons métalliques ou des bandes en acier.

5. Presse à double bande pour la fabrication de matériaux composites en fibres, à partir d'une matrice thermoplastique et de mats ou nappes en fibres de verre, délimitée latéralement par des bandes (5) continues circulant conjointement, en matériau élastique, caractérisée en ce que les bandes (5) circulant conjointement sont en caoutchouc ou en matière synthétique contenant des pièces rapportées de renforcement.
